Europäisches Patentamt

European Patent Office

Office européen des brevets

(11) Publication number: **0 411 147 A1**

# EUROPEAN PATENT APPLICATION
## published in accordance with Art. 158(3) EPC

(21) Application number: 90902818.5

(22) Date of filing: 09.02.90

(86) International application number:
PCT/JP90/00167

(87) International publication number:
WO 90/10338 (07.09.90 90/21)

(51) Int. Cl.⁵: **H02M 3/28**

(30) Priority: 22.02.89 JP 40366/89

(43) Date of publication of application:
06.02.91 Bulletin 91/06

(84) Designated Contracting States:
**DE FR GB**

(71) Applicant: **FANUC LTD.**
**3580, Shibokusa Aza-Komanba, Oshino-mura**
**Minamitsuru-gun, Yamanashi 401-05(JP)**

(72) Inventor: **HIROTA, Mitsuhiko**
**3-14-13, Ikejiri Setagaya-ku**
**Tokyo 154(JP)**
Inventor: **KODAMA, Tsugio, FANUC**
**Manshonharimomi**
**Room 8-206, 3511-1, Shibokusa, Oshino-mura**
**Minamitsuru-gun, Yamanashi 401-05(JP)**

(74) Representative: **Billington, Lawrence Emlyn et al**
**Haseltine Lake & Co Hazlitt House 28,**
**Southampton Buildings Chancery Laneane**
**London WC2A 1AT(GB)**

(54) **CIRCUIT FOR PROTECTING SWITCHING REGULATOR.**

(57) The invention relates to a circuit for protecting switching regulator, capable of automatically stopping the switching operation of the switching regulator on occurring of an abnormality and automatically resuming the switching operation on recovering to the normal state. A voltage is induced in the secondary winding (,2) of a transformer (20) by the operation of a field-effect transistor (30). The voltage is then rectified and smoothed to produce a secondary side output voltage. The difference between the output voltage and a reference voltage is fed back from an error detecting circuit (90) to a pulse width control unit (41) so as to maintain the output voltage constant. In case of abnormality, i.e., too high or low a voltage or too large or small a current of the primary winding (21), an abnormality detecting circuit continues to send abnormality detection signals (S1) as long as the abnormality exists. In accordance with these signals (S1), a re-triggerable timer sends a stop signal (S2) to an AND circuit (42) to stop the switching operation of the transistor (30). On recovering to the normal condition, the switching operation of the transistor (30) is automatically resumed after a predetermined period of time has passed from the time of extinction of the stop signals (S2).

20

21

22

61  52

40

41

PULSE
WIDTH
CONTROL
SECTION

DRIVER
CIRCUIT
43

42

30

1

12

11

RECTIFIER
CIRCUIT

10

62

S2

TIMER  S1

51

70

RECTIFIER
CIRCUIT

80

SMOOTHING
CIRCUIT

60  50

ABNORMAL-STATE
DETECTION CIRCUIT

ERROR
DETECTION
CIRCUIT

91  90

23

## PROTECTION NETWORK FOR A SWITCHING REGULATOR

### Technical Field

The present invention relates to a protection network for a switching regulator, and more particularly, to a protection network which is mounted on a primary-type switching regulator adapted for primary-side detection of an abnormal-state, and which has an automatic restoration function.

### Background Art

Among switching regulators in which a stabilized output voltage is produced on the secondary side by controlling the switching operation of a switching element connected in series with a DC power source on the primary side, primary-type switching regulators are conventionally known in which an abnormal state, such as overcurrent, overvoltage, or voltage drop (instantaneous power failure), is detected on the primary side.

In general, the primary-type switching regulators are designed so that the switching operation of the regulator is stopped in response to an abnormal-state detection signal set in a built-in latch circuit in a reset circuit when an abnormal state is brought about, so as to protect the components of the regulator, and prevent wrong operation of secondary-side circuits. Upon restoration form the abnormal state to a normal state, the switching operation is restarted by externally applying a restoration signal to the latch circuit to clear the abnormal-state detection signal set in the latch circuit, or by turning on again an external power source connected to the regulator after temporarily turning off the same, thereby initializing the regulator. To this end, external restoration means, such as restoration signal applying means or regulator initializing means (heavy-current circuit), is essential, so that the construction of the device is complicated. Depending on its arrangement, the external restoration means requires manual operation, which is troublesome.

Also known is a switching regulator of a current-limit type in which the switching operation is stopped and the primary current is limited when an overcurrent is detected. This regulator, however, is subject to a drawback such that the limited current continues to flow through both the primary and secondary sides, thereby producing heat, even when the switching operation is stopped due to a short circuit on the secondary side, for example. If the secondary-side voltage temporarily drops due to a temporary short circuit on the secondary side, moreover, the secondary-side circuits, including integrated circuits (IC), sometimes may operate wrongly.

### Disclosure of the Invention

The object of the present invention is to provide a protection network for a switching regulator, which is capable of automatically stopping a switching operation of the switching regulator upon detection of an abnormal state, and of automatically restarting the switching operation upon restoration from the abnormal state to a normal state.

In order to achieve the above object, according to the present invention, a protection network for a switching regulator comprises: an abnormal-state detection circuit for generating an abnormal-state detection signal while an abnormal state is lasting; a retriggerable timer responsive to the abnormal-state detection signal; and a gate circuit responsive to an operation of the timer so as to stop a switching operation of a switching element of the switching regulator, and operable to automatically restart the switching operation upon completion of the operation of the timer.

According to the present invention, as described above, the switching operation of the switching regulator is stopped in response to the abnormal-state detection signal delivered from the abnormal-state detection circuit as long as the abnormal state lasts, whereby the components of the switching regulator can be protected, and wrong operation can be prevented. Since the switching operation can be automatically restarted upon restoration from the abnormal state to the normal state, moreover, no manual operation is required at the time of the restoration, and no external restoring means is needed, whereby the device construction can be simplified.

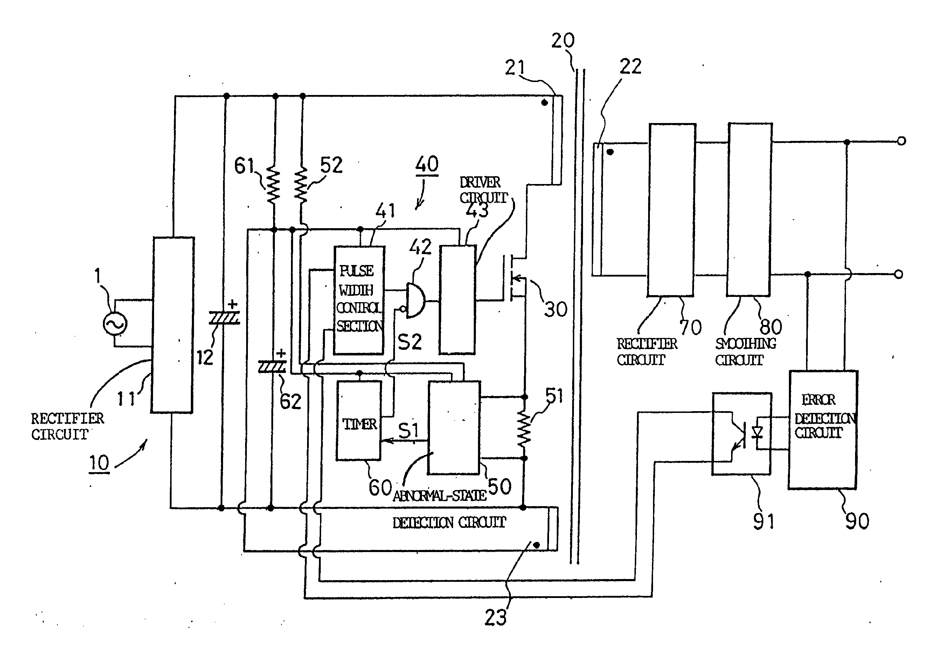

### Brief Description of the Drawing

The drawing is a schematic block diagram showing a switching regulator furnished with a protection network according to one embodiment of the present invention.

### Best Mode of Carrying Out the Invention

Referring now to the accompanying drawing, a switching regulator of the pulse-width modulation type comprises a DC power circuit 10, which includes a rectifier circuit 11 connected to an external AC power source 1, and a smoothing capacitor 12 connected across the circuit 11. The positive output side of the DC power circuit 10 is connected to one end of a primary winding 21 of a transformer 20. The other end of the primary winding 21 is connected to the source terminal of a field-effect transistor 30 for use as a switching element, and the drain terminal of the transistor 30 is connected to the negative output side of the DC power circuit 10 through a resistor 51.

The switching regulator comprises a control circuit 40 for controlling the on-off time ratio of the field-effect transistor 30, an abnormal-state detection circuit 50 adapted to periodically generate abnormal-state detection signals S1 while the voltage and current on the primary side of the switching regulator are abnormal, and a retriggerable timer 60 for generating a stop signal S2 before the passage of a predetermined timer set time after the entry of each abnormal-state detection signal S1. The timer 60, which is formed, for example, of a retriggerable timer of a down-count type, is set to a preset value corresponding to the predetermined timer set time, which is considerably longer than the generation cycle of the abnormal-state detection signals S1, every time one of the periodically generated abnormal-state detection signals S1 is entered therein.

A series circuit for operating voltage production, which is composed of a resistor 61 and a capacitor 62, is connected in parallel with the smoothing capacitor 12, one end of an auxiliary winding 23 for operating voltage production of the transformer 20 is connected to the junction between the resistor 61 and the capacitor 62, and the other end of the auxiliary winding 23 is connected to the negative output terminal of the DC power circuit 10.

A secondary winding 22 of the transformer 20 is connected individually to both output terminals of the switching regulator and the input side of an error detection circuit 90 through a rectifier circuit 70 and a smoothing circuit 80. The error detection circuit 90 is designed so as to compare a reference voltage from a built-in voltage source (not shown) and the secondary-side output voltage of the regulator (output of the smoothing circuit 80), and the output side of the error detection circuit 90 is connected to the input side of the control circuit 40 through a photocoupler 91.

More specifically, the control circuit 40 includes a pulse width control section 41, whose input side is connected to the output side of the photocoupler 91 and which is arranged to generate pulses of a width corresponding to the output of the error detection circuit 90, an AND circuit 42, and a driver circuit 43. Both input terminals of AND circuit 42 are connected individually to the respective output terminals of pulse width control section 41 and the timer 60, while the output terminal of the AND circuit 42 is connected to the input side of the driver circuit 43. Further, the output side of the driver circuit 43 is connected to the gate terminal of the field-effect transistor 30. Moreover, the abnormal-state detection circuit 50 has its current input terminal connected across the resistor 51 and its voltage input terminal connected to the positive output terminal of the DC power circuit 10 through a resistor 52. Furthermore, the respective power input terminals of the pulse width control section 41, driver circuit 43, abnormal-state detection circuit 50, and timer 60 are connected to the junctions between the resistor 61, capacitor 62, and auxiliary winding 23. The aforesaid elements 42, 50 to 52, and 60 constitute a protection network for the switching regulator.

The following is a description of the operation of the switching regulator with the aforementioned construction.

When the external AC power source 1 is turned on, an AC power output is rectified and smoothed in the DC power circuit 10, and is then applied to the capacitor 62 through the resistor 61, so that the capacitor 62 is charged. The charging voltage of the capacitor 62 is supplied to the primary-side elements 41, 43, 50 and 60 of the switching regulator as their respective operating voltages, whereby the operation of the switching regulator is started.

While the switching regulator is operating, pulses of a predetermined on-off time ratio are applied from the pulse width control section 41 to the field-effect transistor 30 through the AND circuit 42 and the driver circuit 43, so that the transistor 30 performs on-off operation (switching operation). Accompanying this switching operation, a pulsating current flows through the primary winding 21 of the transformer 20, whereby an excitation voltage is generated in the secondary winding 22. The secondary-side output voltage, obtained by rectifying and smoothing the excitation voltage in the rectifier circuit 70 and the smoothing circuit 80, is delivered to the outside through the output terminal of the switching regulator. The capacitor 62 for operating voltage supply is charged with an exciting voltage generated in the auxiliary winding 23 of the transformer 20.

Further, the secondary-side output voltage of the regulator is compared with the reference voltage in the error detection circuit 90, and the difference between the two voltages is fed back to the pulse width control section 41 through the photocoupler 91. The pulse width control section 41 controls the pulse width in accordance with the voltage difference so that the secondary-side output voltage of the regulator is equal to the reference voltage. As a result, a stabilized voltage is supplied from the switching regulator to the outside. While the switching regulator is operating in this manner, the abnormal-state detection circuit 50 continually observes the voltage across the resistor 51, which is indicative of the primary-side voltage of the regulator, and a current flowing through the resistor 52, which is indicative of the primary-side current of the regulator.

If the voltage or current on the primary side of the switching regulator becomes too high or too low, for example, the abnormal-state detection circuit 50 generates the abnormal-state detection signals S1 indicative of the occurrence of an abnormal state on the primary side. These abnormal-state detection signals S1 continue to be generated periodically as long as the abnormal state lasts. The retriggerable timer 60 starts observing the predetermined timer set time every time the abnormal-state detection signal S1 is inputted, and generates the stop signal S2 before the passage of the timer set time.

When the stop signal S2 is applied to the input terminal of the AND circuit 42, the gate of the AND circuit 42 is disabled so that the pulse supply from the pulse width control section 41 to the driver circuit 43 is cut off. As a result, the switching operation of the field-effect transistor 30 automatically stops, and the excitation voltage ceases to be generated in the secondary winding 22 of the transformer 20.

Thereafter, upon restoration from the abnormal state to a normal state, the abnormal-state detection signals S1 periodically generated during the continuation of the abnormal state cease to be generated. When the predetermined timer set time passes after the last abnormal-state detection signal S1 is generated, therefore, the stop signal S2 from the timer 60 goes out. As a result, when the predetermined timer set time passes after the normal state is restored, the gate of the AND circuit 42 is enabled, so that the pulse supply from the pulse width control section 41 to the driver circuit 43 is restarted, whereupon the switching operation of the field-effect transistor 30 is automatically restarted. Also, the aforementioned output voltage control operation is performed in the control circuit 40, and a constant voltage is supplied from the switching regulator to the outside.

The present invention is not limited to the embodiment described above, and various changes may be effected therein.

Although the present invention has been described in connection with the above embodiment in which it is applied to a switching regulator of the pulse-width modulation type, it may be also applied to a switching regulator of a pulse-frequency modulation type.

Further, a protection network, composed of an abnormal-state detection circuit for generating an abnormal-state detection signal adapted to rise when an abnormal state is brought about and to fall when the abnormal state is eliminated, a flip-flop circuit adapted to be set and reset corresponding to the leading and trailing edges, respectively, of the abnormal-state detection signal, a timer connected to the reset output terminal of the flip-flop circuit, and an AND circuit connected to the set output terminal of the flip-flop circuit and the output terminal of the timer, for example, may be used in place of the protection network of the above embodiment, which is composed of the abnormal-state detection circuit for periodically generating the abnormal-state detection signals during the continuation of an abnormal state, the retriggerable time, and the AND circuit.

## Claims

1. A protection network for a switching regulator, comprising:
    an abnormal-state detection circuit for generating an abnormal-state detection signal while an abnormal state is lasting;
    a retriggerable timer responsive to said abnormal-state detection signal; and
    a gate circuit responsive to an operation of said timer so as to stop a switching operation of a switching element of the switching regulator, and operable to automatically restart the switching operation upon completion of the operation of said timer.

2. A protection network for a switching regulator according to claim 1, wherein said abnormal-state detection circuit detects the abnormal state on the primary side of said switching regulator.

3. A protection network for a switching regulator according to claim 2, wherein said abnormal-state detection circuit detects at least one of an overvoltage, voltage drop, and overcurrent on the primary side of said switching regulator.

4. A protection network for a switching regulator according to claim 1, wherein said switching regulator includes a control section for delivering a control output for controlling the switching operation, and said gate circuit prevents the delivery of said control output in response to the operation of said timer.

5. A protection network for a switching regulator according to claim 4, wherein said control section generates a pulse as said control output.

EP 0 411 147 A1

# INTERNATIONAL SEARCH REPORT

International Application No  PCT/JP90/00167

## I. CLASSIFICATION OF SUBJECT MATTER (if several classification symbols apply, indicate all) *

According to International Patent Classification (IPC) or to both National Classification and IPC

Int. Cl$^5$      H02M3/28

## II. FIELDS SEARCHED

| Minimum Documentation Searched * | |
|---|---|
| Classification System ' | Classification Symbols |
| IPC          H02M3/28 | |

Documentation Searched other than Minimum Documentation
to the Extent that such Documents are Included in the Fields Searched *

| | |
|---|---|
| Jitsuyo Shinan Koho | 1974 - 1989 |
| Kokai Jitsuyo Shinan Koho | 1974 - 1989 |

## III. DOCUMENTS CONSIDERED TO BE RELEVANT *

| Category * \ | Citation of Document, ¹¹ with indication, where appropriate, of the relevant passages ¹² | Relevant to Claim No. ¹³ |
|---|---|---|
| X | JA, A, 54-124214 (Motorala, Inc.),<br>27 September 1979 (27. 09. 79),<br>& US, 881309 | 1 - 5 |

\* Special categories of cited documents. ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 15, 1990 (15. 03. 90) | April 2, 1990 (02. 04. 90) |
| International Searching Authority | Signature of Authorized Officer |
| Japanese Patent Office | |

Form PCT/ISA/210 (second sheet) (January 1985)